# EUROPÄISCHE PATENTSCHRIFT

(11) **EP 1 707 755 B1**
(45) Veröffentlichungstag und Bekanntmachung des Hinweises auf die Patenterteilung: **14.05.2014**
(21) Anmeldenummer: 05027771.4
(22) Anmeldetag: 19.12.2005
(51) Int. Cl.: F16B 33/00, F16B 35/06, F16B 39/02, F16B 41/00, F01D 17/16, F02C 6/12

(54) **Turbinengehäuse eines Abgasturboladers mit verstellbarer Turbinengeometrie**
Turbocharger turbine casing having variable geometry turbine
Carter de turbine d'un turbocompresseur avec une turbine à géométrie variable

(30) Priorität: 08.03.2005 DE 102005010500; 16.03.2005 DE 102005012048
(43) Veröffentlichungstag der Anmeldung: 04.10.2006
(73) Patentinhaber: Dr. Ing. h.c. F. Porsche AG, 70435 Stuttgart (DE)
(72) Erfinder: Sterner, Andreas, 71696 Möglingen (DE)

(56) Entgegenhaltungen:
- EP-A- 0 480 911
- EP-A- 1 236 866
- EP-A- 1 394 364
- EP-A- 1 528 225
- WO-A-2004/027218
- US-A- 6 055 288
- US-A- 6 164 886

## Beschreibung

Die Erfindung betrifft ein Turbinengehäuse eines Abgasturboladers mit verstellbarer Turbinengeometrie gemäß den Merkmalen des Oberbegriffs des Patentanspruchs 1.

Abgasturbolader, bei denen mittels verstellbarer Leitschaufeln der Ladedruck regelbar ist, sind beispielsweise aus der DE 103 12 324 B3 und der EP-A-0480911 bekannt. Im Turbinengehäuse derartiger VTG-Lader ist dabei ein Leitschaufelapparat befestigt, der aus einem Trägerring für die Leitschaufeln sowie einem Abdeckring besteht, der unter Einhaltung eines Leitschaufel- Spaltabstandes dem Trägerring gegenüberliegt. Zur Beabstandung von Träger- und Abdeckring sind radial um den Umfang beider Ringe verteilt angeordnete Distanzelemente, z.B. in Form von Distanzhülsen, vorgesehen, die bspw. von Befestigungsschrauben gehalten sind. Insbesondere beim Einsatz dieser VTG-Lader bei Otto-Motoren sind diese Bauteile hohen Abgastemperaturen ausgesetzt. Besonders kritisch ist hierbei u.a. die dauerhaltbare Verschraubung der Distanzelemente. Werden die Distanzelemente vom heißen Abgasstrom beaufschlagt, dehnen sich diese in Längsrichtung entsprechend aus, während die Befestigungsschrauben noch relativ kalt sind. Bei einem nachfolgenden Lastsprung (Volllast Richtung untere Teillast) wird umgekehrt zunächst das Distanzelement durch den Abgasstrom gekühlt, während die Befestigungsschraube noch relativ heiß ist. Dies führt zum zeitlich schnelleren Schrumpfen des Distanzelementes gegenüber der Befestigungsschraube und somit zu einem entsprechenden Vorspannkraftverlust. Bedingt durch den Vorspannkraftverlust muss nun die Befestigungsschraube sämtliche durch den Motorbetrieb auftretenden Querkräfte aufnehmen, was unter Umständen zu einem Bauteilversagen der Befestigungsschraube führt.

Aufgabe der Erfindung ist es, die zuvor beschriebenen Nachteile zu überwinden, damit ein sicherer Dauerbetrieb des VTG-Laders gewährleistet ist.

Diese Aufgabe wird durch das im Anspruch 1 angegebene Turbinengehäuse gelöst.

Durch die in den Unteransprüchen angegebenen Merkmale sind weitere vorteilhafte Ausgestaltungen und Weiterbildungen des Turbinengehäuses bzw. des Leitschaufelapparates für einen VTG-Lader möglich.

Vorzugsweise sind pro Verschraubung zwei um 180° versetzt am Aussenumfang der Aufnahmeöffnung für den Schraubenkopf angeordnete Sicherungsausnehmungen für die Aufnahme des Schraubenkopfmaterials vorgesehen. Damit ist eine optimale formschlüssige Verbindung hergestellt, die einen Vorspannkraftverlust und somit ein Herausdrehen der Befestigungsschraube verhindert.

Die Sicherungsausnehmungen können sowohl mechanisch, z.B. durch ein entsprechendes Fräswerkzeug oder alternativ dazu, bereits im Gießprozess, z.B. im MIM (Metal Injection Moulding)- Verfahren oder im Feingussverfahren zur Herstellung des Träger- oder Abdeckringes eingebracht werden.

Ein gute kraftschlüssige Verschraubung des Leitschaufelapparats ist dadurch sichergestellt, dass eine Befestigungsschraube mit einem Senkkopf Verwendung findet.

Im Träger- oder Abdeckring sind drei gleichmäßig um den Umfang verteilt angeordnete Aufnahmeöffnungen für die Befestigungsschrauben vorgesehen.

Ein Ausführungsbeispiel der Erfindung ist in den Zeichnungen dargestellt und wird im nachfolgenden näher beschrieben.

### Es zeigen:

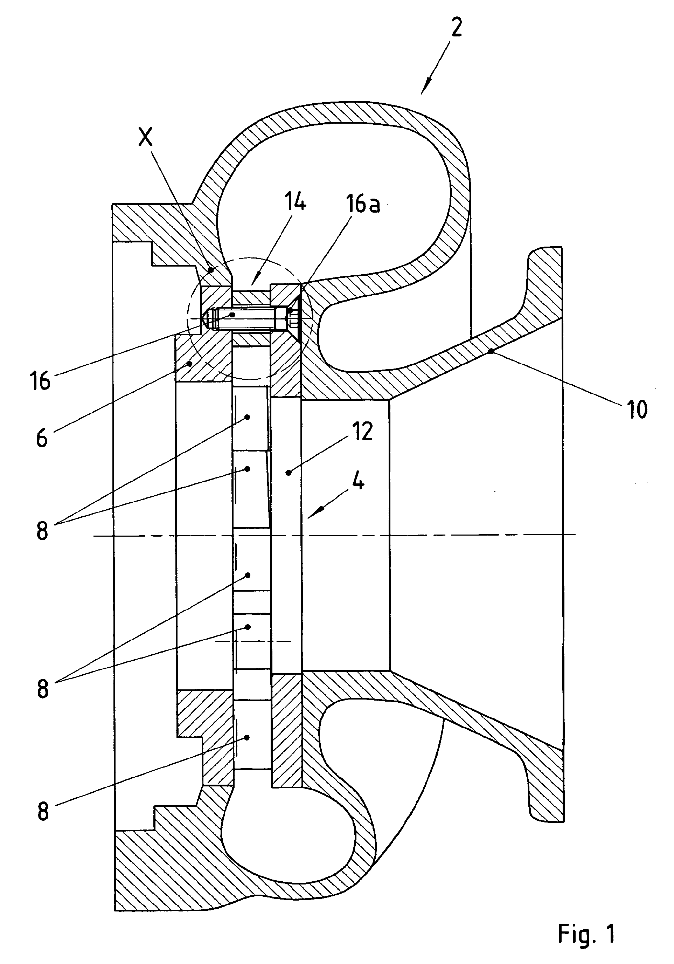

- Fig. 1: einen Querschnitt durch ein Turbinengehäuse eines Abgasturboladers,

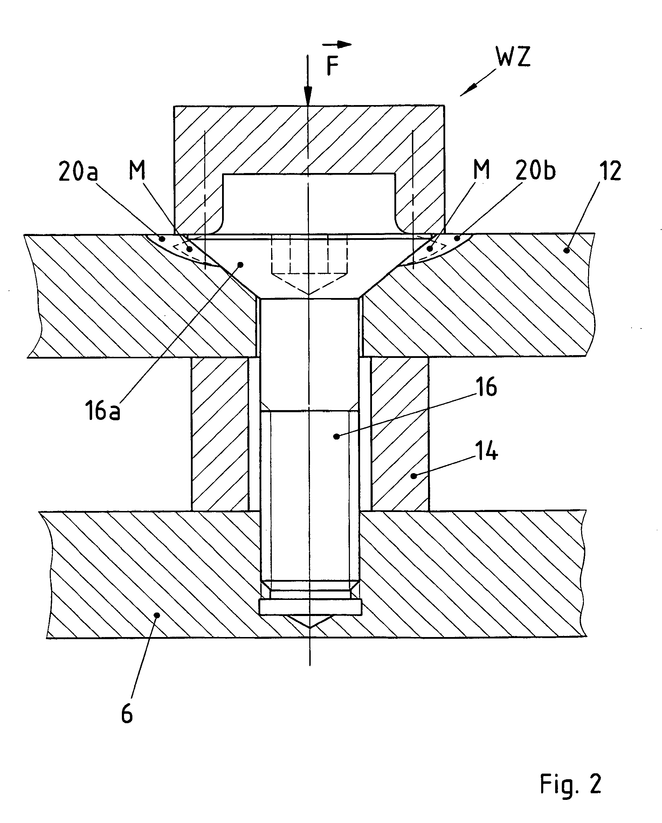

- Fig. 2: einen vergrößerten Ausschnitt X gemäß Fig. 1 und
- Fig. 3: eine Draufsicht auf einen Abdeckring eines Leitschaufelapparates des Turbinengehäuses (ohne Verschraubung)

Im Turbinengehäuse 2 eines so genannten VTG-Abgasturboladers ist ein Leitschaufelapparat 4 angeordnet. Der Leitschaufelapparat 4 besteht aus einem Trägerring 6, an dem zur Regelung des Ladedrucks verstellbare Leitschaufeln 8 befestigt sind. Die Leitschaufeln 8 werden auf ihrer dem Abgasaustritt 10 zugeordneten Stirnseite durch einen Abdeckring 12 begrenzt. Mit Hilfe von Distanzelementen, die im vorliegenden Fall als Distanzhülsen 14 ausgebildet und radial auf dem Umfang von Träger- und Abdeckring 6, 12 verteilt sind, wird der axiale Leitschaufelspalt definiert. Die Distanzhülsen 14 sind mit Hilfe von Befestigungsschrauben 16 gehalten.

Im vorliegenden Ausführungsbeispiel sind drei gleichmäßig um den Umfang verteilt (3x120°) angeordnete Distanzhülsen 14 bzw. Befestigungsschrauben 16 auf einem gemeinsamen Teilkreis TK vorgesehen.

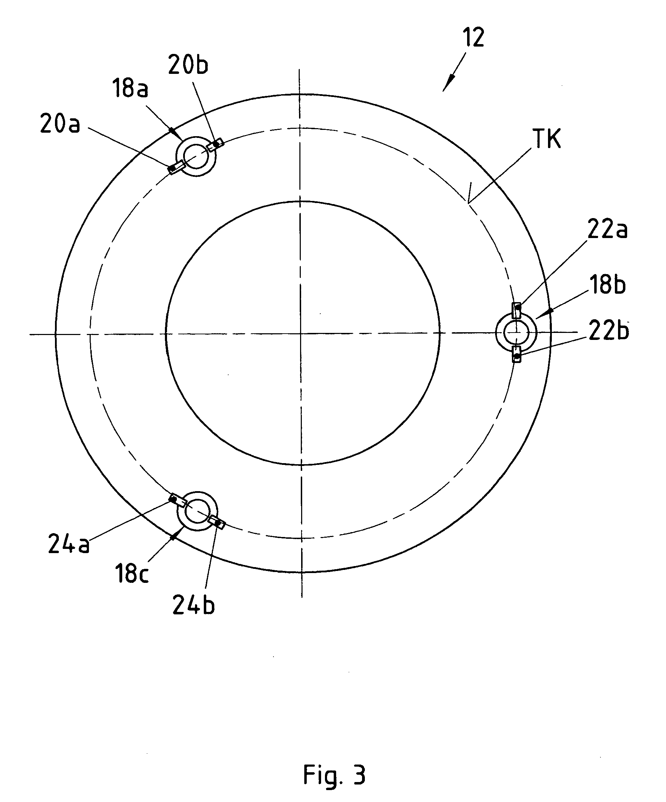

Der Schraubenkopf 16a der Befestigungsschrauben 16 ist als Senkkopf ausgeführt, so dass der konisch sich verjüngende Schraubenkopf 16a in einer entsprechenden im Abdeckring 12 vorgesehenen Aufnahmeöffnung 18a bis 18c versenkt ist (siehe Fig. 3). Am Aussenumfang jeder Aufnahmeöffnung 18a bis 18c sind jeweils zwei um 180° versetzt zueinander angeordnete schlitzartige Sicherungsausnehmungen 20a, 20b; 22a, 22b und 24a, 24b eingebracht, in die - wie später noch erläutert- Material des Schraubenkopfes 16a eingebracht ist.

Die Sicherungsausnehmungen 20a, 20b; 22a, 22b und 24a, 24b können mechanisch, z.B. durch einen Finger- oder Scheibenfräser eingebracht oder alternativ dazu, bereits im Giessprozess zur Herstellung der Abdeckscheibe 12 z.B. im MIM (Metal Injection Moulding)- Verfahren oder im Feingussverfahren hergestellt werden.

Nachdem der Trägerring 6 für die Leitschaufeln 8 mit dem Abdeckring 12 unter Ausbildung eines entsprechenden Anzugsmomentes verschraubt worden ist, wird mit Hilfe eines Verstemmwerkzeuges WZ Material M des Schraubenkopfes 16a in die Sicherungsausnehmungen 20a, 20b; 22a, 22b und 24a, 24b gedrückt und somit zusätzlich zu der kraftschlüssigen Verbindung ein partieller Formschluss zwischen Schraubenkopf 16a und Abdeckring 12 hergestellt.

Die Anzahl und die geometrische Ausbildung der Sicherungsausnehmungen 20a, 20b; 22a, 22b und 24a, 24b sind selbstverständlich für den konkreten Anwendungsfall variierbar und richten sich bspw. nach Größe und Leistung des Abgasturboladers bzw. des Motors und der Höhe der Abgastemperaturen. Das Gleiche trifft auf die Art der Verschraubung zu. Hier sind bspw. auch Befestigungsschrauben mit zylindrischen Schraubenköpfen o.ä. denkbar.

## Patentansprüche

1. Turbinengehäuse eines Abgasturboladers mit verstellbarer Turbinengeometrie, so genannter VTG-Lader, mit einem Trägerring (6), an dem zur Regelung des Ladedrucks verstellbare Leitschaufeln (8) befestigt sind, sowie mit einem Abdeckring (12) für die Leitschaufeln (8), wobei Träger- und Abdeckring (6, 12) zur Ausbildung eines Leitschaufelspaltes durch Distanzelemente (14) beabstandet sind, die jeweils von einer Befestigungsschraube (16) durchgriffen sind, die im Träger- oder Abdeckring (6, 12) verschraubt ist, wobei im Träger- oder Abdeckring (6, 12) Aufnahmeöffnungen (18a bis 18c) für den Kopf (16a) der Befestigungsschraube (16) vorgesehen sind,
wobei der Kopf (16a) der Befestigungsschraube (16) als Senkkopf ausgebildet und in der konisch sich verjüngenden Aufnahmeöffnung (18a bis 18c) aufgenommen ist,
**dadurch gekennzeichnet, dass**
im Träger-/oder Abdeckring (6, 12) am Aussenumfang der Aufnahmeöffnung (18a bis 18c) mindestens eine Sicherungsausnehmung (20a,b; 22a, 22b; 24a, 24b) eingebracht ist, die zur Aufnahme von Material (M) des Schraubenkopfes (16a) zur Herstellung einer formschlüssigen Verbindung vorgesehen ist.

2. Turbinengehäuse nach Anspruch 1, **dadurch gekennzeichnet, dass** jeweils zwei, vorzugsweise um 180° versetzt zueinander angeordnete Sicherungsausnehmungen (20a,b; 22a, 22b; 24a, 24b) am Aussenumfang der Aufnahmeöffnung (18a bis 18c) vorgesehen sind.

3. Turbinengehäuse nach Anspruch 1 oder 2, **dadurch gekennzeichnet, dass** die Sicherungsausnehmungen (20a,b; 22a, 22b; 24a, 24b) schlitzartig ausgebildet und auf einem gemeinsamen Teilkreis (TK) angeordnet sind.

4. Turbinengehäuse nach einem der vorhergehenden Ansprüche, **dadurch gekennzeichnet, dass** die Sicherungsausnehmungen (20a,b; 22a, 22b; 24a, 24b) mechanisch, z.B. durch einen Scheiben- oder Fingerfräser eingebracht sind.

5. Turbinengehäuse nach einem der Ansprüche 1 bis 3, **dadurch gekennzeichnet, dass** die Sicherungsausnehmungen (20a,b; 22a, 22b; 24a, 24b) beim Giessprozess zur Herstellung des Träger- oder Abdeckringes (6, 12) eingebracht sind.

6. Turbinengehäuse nach einem der vorhergehenden Ansprüche, **dadurch gekennzeichnet, dass** das Material (M) des Schraubenkopfes (16a) durch ein Verstemmwerkzeug (WZ) in die Sicherungsaussparungen (20a,b; 22a, 22b; 24a, 24b) eingebracht ist.

7. Turbinengehäuse nach einem der vorhergehenden Ansprüche, **dadurch gekennzeichnet, dass** im Träger- oder Abdeckring (6, 12) drei gleichmäßig um den Umfang verteilt angeordnete Aufnahmeöffnungen (18a bis 18c) für die Befestigungsschrauben (16) vorgesehen sind.

## Claims

1. Turbine housing of an exhaust-gas turbocharger with adjustable turbine geometry, a so-called VTG charger, having a support ring (6) on which there are fastened guide vanes (8) which are adjustable for the regulation of the charge pressure, and having a cover ring (12) for the guide vanes (8), wherein the support and cover rings (6, 12) are spaced apart by spacer elements (14) such that a guide vane gap is formed, through each of which spacer elements there extends a fastening screw (16) which is screwed into the support or cover ring (6, 12), wherein receiving openings (18a to 18c) for the head (16a) of the fastening screw (16) are provided in the support or cover ring (6, 12), wherein the head (16a) of the fastening screw (16) is in the form of a countersunk head and is received in the conically tapering receiving opening (18a to 18c),
**characterized in that**
at least one securing recess (20a,b; 22a, 22b; 24a, 24b) is formed in the support and/or cover ring (6, 12) at the outer circumference of the receiving opening (18a to 18c), said at least one securing recess being provided for receiving material (M) of the screw head (16a) for the purpose of producing a positively locking connection.

2. Turbine housing according to Claim 1, **characterized in that** in each case two securing recesses (20a,b; 22a, 22b; 24a, 24b), arranged preferably with a 180° offset with respect one another, are provided at the outer circumference of the receiving opening (18a to 18c).

3. Turbine housing according to Claim 1 or 2, **characterized in that** the securing recesses (20a,b; 22a, 22b; 24a, 24b) are of slot-like form and are arranged on a common pitch circle (TK).

4. Turbine housing according to one of the preceding claims, **characterized in that** the securing recesses (20a,b; 22a, 22b; 24a, 24b) are formed in mechanically, for example by means of a side milling cutter or endmilling cutter.

5. Turbine housing according to one of Claims 1 to 3, **characterized in that** the securing recesses (20a,b; 22a, 22b; 24a, 24b) are formed in during the casting process for the production of the support or cover ring (6, 12).

6. Turbine housing according to one of the preceding claims, **characterized in that** the material (M) of the screw head (16a) is driven into the securing cutouts (20a,b; 22a, 22b; 24a, 24b) by means of a caulking tool (WZ).

7. Turbine housing according to one of the preceding claims, **characterized in that** three receiving openings (18a to 18c) for the fastening screws (16) are provided in a circumferentially uniformly distributed arrangement in the support or cover ring (6, 12).

## Revendications

1. Carter de turbine de turbocompresseur à gaz d'échappement comprenant une géométrie de turbine réglable, appelé compresseur VTG, comprenant un anneau de support (6) sur lequel sont fixées des aubes directrices (8) réglables pour la régulation de la pression de suralimentation, et comprenant un anneau de recouvrement (12) pour les aubes directrices (8), l'anneau de support et l'anneau de recouvrement (6, 12) étant espacés par des éléments d'espacement (14) pour réaliser un interstice entre les aubes directrices, les éléments d'espacement étant à chaque fois traversés par une vis de fixation (16) vissée dans l'anneau de support ou dans l'anneau de recouvrement (6, 12), des ouvertures de réception (18a à 18c) pour la tête (16a) de la vis de fixation (16) étant prévues dans l'anneau de support ou dans l'anneau de recouvrement (6, 12), la tête (16a) de la vis de fixation (16) étant réalisée sous forme de tête fraisée et étant reçue dans l'ouverture de réception se rétrécissant de manière conique (18a à 18c),
**caractérisé en ce**
**qu'**au moins un évidement de fixation (20a,b ; 22a, 22b ; 24a, 24b) est pratiqué dans l'anneau de support ou dans l'anneau de recouvrement (6, 12) au niveau de la périphérie extérieure de l'ouverture de réception (18a à 18c), lequel est prévu pour recevoir le matériau (M) de la tête de vis (16a) pour réaliser une connexion par engagement par correspondance de forme.

2. Carter de turbine selon la revendication 1, **caractérisé en ce que** deux évidements de fixation (20a,b ; 22a, 22b ; 24a, 24b) disposés de manière décalée l'un par rapport à l'autre de préférence de 180° sont à chaque fois prévus sur la périphérie extérieure de l'ouverture de réception (18a à 18c).

3. Carter de turbine selon la revendication 1 ou 2, **caractérisé en ce que** les évidements de fixation (20a,b ; 22a, 22b ; 24a, 24b) sont réalisés en forme de fente et sont disposés sur un cercle partiel commun (TK).

4. Carter de turbine selon l'une quelconque des revendications précédentes, **caractérisé en ce que** les évidements de fixation (20a,b ; 22a, 22b ; 24a, 24b) sont réalisés de manière mécanique, par exemple par une fraise à disque ou une fraise en bout.

5. Carter de turbine selon l'une quelconque des revendications 1 à 3, **caractérisé en ce que** les évidements de fixation (20a,b ; 22a, 22b ; 24a, 24b) sont pratiqués lors du processus de coulée pour la fabrication de l'anneau de support ou de l'anneau de recouvrement (6, 12).

6. Carter de turbine selon l'une quelconque des revendications précédentes, **caractérisé en ce que** le matériau (M) de la tête de vis (16a) est pratiqué par un outil de matage (WZ) dans les évidements de fixation (20a,b ; 22a, 22b ; 24a, 24b).

7. Carter de turbine selon l'une quelconque des revendications précédentes, **caractérisé en ce que** trois ouvertures de réception (18a à 18c) pour les vis de fixation (16) réparties uniformément sur la périphérie sont prévues dans l'anneau de support ou dans l'anneau de recouvrement (6, 12).
